# EUROPEAN PATENT APPLICATION

(11) **EP 4 632 167 A1**
(43) Date of publication of application: **15.10.2025**
(21) Application number: 24182430.9
(22) Date of filing: 14.06.2024
(51) Int. Cl.: E04C 2/04, E04C 2/52

(54) **FIRE RESISTANT BUILDING BOARD**

(30) Priority: 10.04.2024 US 202463632344 P; 20.05.2024 US 202463649706 P
(71) Applicant: SAINT-GOBAIN PLACO, 92400 Courbevoie (FR)
(72) Inventor: LESPIAT, Remi, MALVERN, 19355 (US); AMATO, Dahlia, MALVERN, 19355 (US); GODEFROID, Julie, MALVERN, 19355 (US); MARZIN, Leana, MALVERN, 19355 (US)
(74) Representative: Saint-Gobain Recherche

(57) **Abstract**

A building board, particularly a gypsum board, can include a first cover sheet, a second cover sheet, and a core disposed between the first and second cover sheets. The core can include gypsum, microsilica, and an additive. The microsilica can no greater than 2.7 wt.% of the building board. The additive can include a polysiloxane material and be no greater than 0.25 wt.% of the building board.

## Description

### FIELD OF THE DISCLOSURE

The present disclosure relates to a fire resistant building board.

### BACKGROUND

Building board, also known as wallboard, plasterboard, or dry wall, is one of the most commonly used building components in the world. Building board is frequently used within the interior of a dwelling, where it functions both as a finished wall covering and as a structural room partition. Building board can also be used on the exterior of a dwelling, where it serves as a sheathing to provide weather protection and insulation. Building board can also be used as an interior facing for other structures as well, such as stairwells, elevator shafts, and interior ducting.

One particularly popular form of building board is known as gypsum board. Gypsum board is constructed by depositing a layer of cementitious gypsum slurry that may contain certain fillers and polymeric additives between two opposing liners, which can be paper, glass fiber mats, or paper supported by glass fiber mats, whereby the glass fiber mats can be partly embedded into the gypsum core.

Most gypsum boards are designed for interior use benefiting from the natural fire resistant property of gypsum. Exposure to high temperature flames or gases can cause portions of the gypsum to release water from the gypsum dihydrate crystals of the core. While the release of water from the dihydrate may function to suppress heat transmission within a panel for some time, shrinkage within the panel can allow heat to reach underlying structures.

There exists a need in the art for improved building board composites, particularly gypsum board composites. More specifically, there is a need in the art for cost-effective building boards which provide enhanced durability and fire resistance.

### SUMMARY

According to one embodiment, a building board is disclosed. The building board can include a first cover sheet, a second cover sheet, and a core between the first cover sheet and the second cover sheet. The core can include gypsum, micro-silica, and an additive. The micro-silica can be in an amount no greater than 2.7 wt. % of the gypsum panel. The additive can include a polysiloxane material in an amount no greater than 0.25 wt. % of the gypsum panel.

According to a further embodiment, a building board is disclosed. The building board can include a first cover sheet, a second cover sheet, and a core between the first cover sheet and the second cover sheet. The core can include gypsum, micro-silica, and an additive. The gypsum panel can have a linear shrinkage of less than 8.5% or a shrinkage improvement of at least 6%, where the shrinkage improvement is equal to a percentage of the building board that did not shrink as compared to an amount of shrinkage that a standard board without a combined polysiloxane material and microsilica. More specifically, the shrinkage improvement refers to the difference (i.e. not a ratio) between the percentage of shrinkage of a standard board without a combined polysiloxane material and microsilica, and the percentage of shrinkage of the building board of the present invention. It is understood that, for the shrinkage improvement, the shrinkage refers to a linear shrinkage.

The present invention more particularly provides a building board, comprising:
a first cover sheet;
a second cover sheet;
a core between the first and second cover sheets, wherein the core comprises:
   gypsum;
   microsilica; and
   an additive, the additive comprising a polysiloxane material;
wherein the building board has one or more of the following features i), ii), and iii):
   i) the microsilica is no greater than 2.7 wt. % of the building board and the additive is no greater than 0.25 wt. % of the building board;
   ii) a linear shrinkage of less than 8.5%; or
   iii) a shrinkage improvement of at least 6%, wherein the shrinkage improvement is equal to a percentage the building board did not shrink as compared to an amount of shrinkage that a standard board without a combined polysiloxane material and microsilica. The linear shrinkage and shrinkage improvement are usually determined after exposure to a temperature of at least 960°C, preferably at least 1000°C.

In some embodiments, the microsilica is no greater than 2.7 wt. % of the building board and the additive is no greater than 0.25 wt. % of the building board.

In some embodiments, the building board has one of the following:
- a linear shrinkage of less than 8.5%; or
- a shrinkage improvement of at least 6%, wherein the shrinkage improvement is equal to a percentage the building board did not shrink as compared to an amount of shrinkage that a standard board without a combined polysiloxane material and microsilica.

In some embodiments, the polysiloxane material is selected from the group consisting of silicone oil, polydimethylsiloxane (PDMS), polymethylhydrosiloxane (PMHS), or any combination thereof.

In some embodiments, the additive is greater than 0 wt.%.

In some embodiments, the additive is no greater than 0.22 wt.% such as no greater than 0.175 wt.%, such as no greater than 0.16 wt.%, or such as no greater than 0.14 wt.%, or such as no greater than 0.1 wt.%, or such as no greater than 0.05 wt.%.

In some embodiments, the gypsum is no greater than 94 wt.% of the building board, such as no greater than 90 wt.% of the building board, or no greater than 85 wt.% of the building board and at least 50 wt.% of the building board.

In some embodiments, the building board further comprises a second additive, wherein the second additive comprises a material selected from the group consisting of expandable graphite, vermiculite, perlite, mica, and a combination thereof.

In some embodiments, the microsilica has a size of no greater than 500 microns.

In some embodiments, the microsilica is no greater than 1.89 wt.% of the building board, such as no greater than 1.6 wt.%, or no greater than 1.5 wt.% of the building board, or no greater than 1.35 wt.% of the building board.

In some embodiments, the microsilica is at least 0.108 wt.% of the building board, such as at least 0.2 wt%, such as at least 0.27 wt.% of the building board.

In some embodiments, the linear shrinkage is less than 7% after exposure to a temperature of at least 960°C, such as less than 6%, or such as less than 5%, or such as less than 4.5% after exposure to a temperature of at least 960°C.

In some embodiments, the linear shrinkage is less than 8% after exposure to a temperature of at least 1000°C.

In some embodiments, the shrinkage improvement is at least 5%, such as at least 3%, or such as at least 2%.

According to a further embodiment, a method of making a building board is disclosed, in particular a method for making a building board as defined herein. Such method can include: forming a core. The core can include gypsum, micro-silica, and an additive. The micro-silica can be in an amount no greater than 2.7 wt. % of the gypsum panel. The additive can include a polysiloxane material in an amount no greater than 0.25 wt. % of the gypsum panel. The method can also include rolling the core between two cover sheets to form a building board. The present invention more particularly provides a method of making a building board as defined herein, said method comprising:
forming a first layer comprising gypsum, microsilica, and an additive, wherein the additive comprises a polysiloxane material; and
rolling the first layer and formed interlayer between two cover sheets to form a building board.

### BRIEF DESCRIPTION OF THE DRAWINGS

The present disclosure may be better understood, and its numerous features and advantages made apparent to those skilled in the art by referencing the accompanying drawings.
FIG. 1 includes an illustration of a cross-section of a building board composite, according to one embodiment.
FIG. 2 includes an illustration of a method of producing a building board, according to one embodiment.
FIG. 3 includes a graph comparing the effects of different concentrations of polysiloxane material and microsilica, according to one embodiment.
FIG. 4 includes a schematic illustration of the apparatus used for the dynamic shrinkage test.
FIG. 5 includes a graph of the linear shrinkage at 960°C of samples 1 to 4.
FIG. 6 includes a graph of the linear shrinkage at 1000°C of samples 1 to 4.
FIG. 7 includes a graph of the linear shrinkage at 1000°C of samples 5 to 7.

### DETAILED DESCRIPTION

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings.

As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus.

As used herein, and unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" are employed to describe elements and components described herein. This is done merely for convenience and to give a general sense of the scope of the invention. This description should be read to include one or at least one and the singular also includes the plural unless it is obvious that it is meant otherwise.

The use of the word "about," "approximately," or "substantially" is intended to mean that a value of a parameter is close to a stated value or position. However, minor differences may prevent the values or positions from being exactly as stated. Thus, differences of up to ten percent (10%) for the value are reasonable differences from the ideal goal of exactly as described.

Unless otherwise defined, all technical and scientific terms used herein have the same meaning as commonly understood by one of ordinary skill in the art to which this invention belongs. The materials, methods, and examples are illustrative only and not intended to be limiting. To the extent not described herein, many details regarding specific materials and processing acts are conventional and may be found in textbooks and other sources within the construction products arts.

Various embodiments of the present disclosure will now be described, by way of example only, with reference to the accompanying drawings.

The present disclosure relates to a building board with a decrease in shrinkage of the board. When exposed to high temperatures, such as in a fire, building boards shrink creating gaps or cracks that can provide pathways for flames, smoke, and heat to penetrate and compromise the fire resistant building board. Thus, it is beneficial and desired to have a building board with as low shrinkage as possible. The building board includes a core with low concentrations of polysiloxane additive and micro-silica disposed between two cover sheets. Particularly, the composite board has an improved reduction in linear shrinkage not previously seen.

The building board of the present disclosure may be suitable for interior use. In embodiments, the building board can be a wallboard, a dry wall, a gypsum board, a gypsum lathe, a gypsum panel, or a gypsum sheathing.

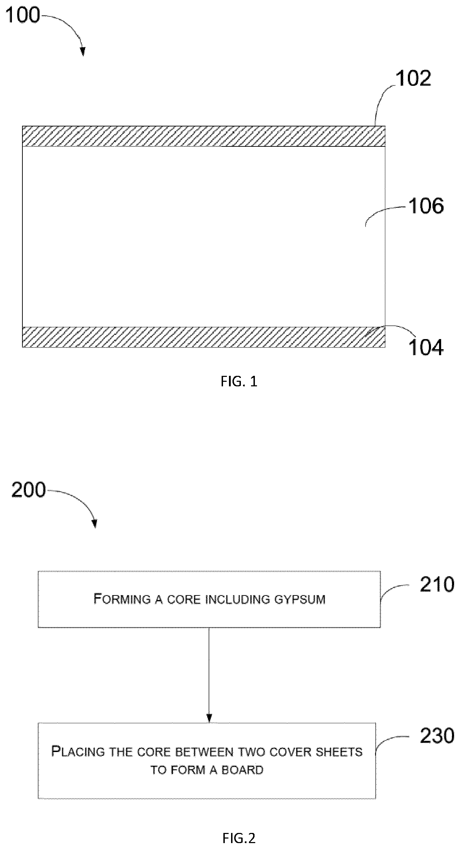

FIG. 1 illustrates a building board composite, according to one embodiment. Building board is typically formed in long sheets in a continuous production line process. The sheets are thereafter cut to a desired length. Boards are produced in standardized widths of either 4 or 9 feet, depending upon the intended use. However, the present invention is by no means limited to any specific board dimensions or geometry. The building board 100 may contain a first cover sheet 104, a second cover sheet 102, and a core 106. In one embodiment, the building board 100 can have a density of between 1250 lbs./msf and 2550 lbs./msf at a thickness between 3/8" and 7/8". In one embodiment, the building board 100 can have a density of between 2500 lbs./msf and 6000lbs./msf at a thickness between 3/8" and 1". In one embodiment, the building board 100 can have a density of at least 1250 lbs./msf, such as at least 1300 lbs./msf, or such as at least 1500 lbs./msf. In one embodiment, the building board 100 can have a density of no greater than 2550 lbs./msf, such as no greater than 2300 lbs./msf, or no greater than 2200 lbs./msf. The building board 100 can have a thickness of at least 3/8". In one embodiment, the building board 100 can have a thickness of at least ½". In one embodiment, the building board 100 can have a thickness of between 3/8" and 7/8".

The core 106 may be between the first cover sheet 104 and the second cover sheet 102. In one embodiment, the core 106 may be made from a gypsum slurry. Gypsum slurry is the semi-hydrous form of calcium sulfate and has many physical characteristics that make it suitable for use as a building component. The slurry that forms the core 106 may comprise a material selected from the group consisting of calcium sulfate alpha hemihydrate, calcium sulfate anhydrite, calcium sulfate dihydrate, and calcium sulfate beta hemihydrate. The amount of gypsum in core 106 can comprise at least about 60 wt.% of set gypsum, such as at least 65 wt.%, at least 70 wt.%, at least 75 wt.% at least 80 wt.%, at least 85 wt.%, at least 90 wt.%, at least 95 wt.%, or at least 98 wt.% of set gypsum based on the total weight of the core layer and is less than 100 wt. % based on the total weight of the core layer. In one embodiment, the gypsum is no greater than 94 wt.% of the building board, such as no greater than 90 wt.% of the building board, or no greater than 85 wt.% of the building board. In one embodiment, the gypsum is at least 50 wt.% based on the total weight of the building board. In one embodiment, set gypsum is gypsum that has dried, set, and is no longer viscous.

When it sets, the calcium sulfate slurry forms a set gypsum material. As the person of ordinary skill in the art will appreciate, a calcium sulfate slurry as described herein will set over time to form a set gypsum material. Accelerators or retarders in the slurry can be used to adjust set time. Drying the set gypsum material to provide the gypsum core can occur at a temperature in the range of 50-350 °C or 50-300 °C (i.e., measured in the environment above the board during drying, e.g., in a drying oven). For example, in various embodiments, drying occurs at a temperature in the range of 100-350 °C, or 100-325 °C , or 100-300 °C, or 150-350 °C, or 150-325 °C , or 150-300 °C, or 200-350 °C, or 200-325 °C , or 200-300 °C. Drying may be accomplished with an oven, wherein the oven temperature is in the range of 50-350 °C, or 50-325 °C, or 50-300°C, or 100-350 °C, or 100-325 °C , or 100-300 °C, or 150-350 °C, or 150-325 °C , or 150-300 °C, or 200-350 °C, or 200-325 °C , or 200-300 °C. During the drying step, the temperature of the gypsum core desirably does not exceed 125 °C, e.g., does not exceed 120 °C, 115 °C, 110 °C, or 105 °C. The person of ordinary skill in the art can use conventional drying methods in practicing the methods and boards of the disclosure.

In some embodiments, the calcium sulfate slurry is formed by combining stucco and water. As is known in the art, stucco can have a variety of compositions depending on the source and application at hand. As used herein, a "stucco" is a material having at least 75 wt.% of calcium sulfate hemihydrate. It is typically provided by calcining gypsum to convert the dihydrate of gypsum to hemihydrate. Real-world samples of stucco typically include, together with the hemihydrate (e.g., present as α-calcium sulfate hemihydrate, β-calcium sulfate hemihydrate, or combinations thereof), one or more of calcium sulfate dihydrate, calcium sulfate anhydrate, and inert calcium sulfate.

The slurry can include one or more additives. The slurry can also include set accelerators, retarders, starch, foaming agents, dispersing agents, mold resistance additives, water resistant additives and fire resistant additives. In one embodiment, polymer additives such as polyvinyl acetate (PVA), or polyvinylalcohol (PVOH) can be included in the slurry. In another embodiment, additives such as mineral fillers such as, for example, glass fibers (e.g., chopped glass fibers), basalt fibers and calcium sulfate whisker fibers, vermiculite, perlite, clay, colloidal silica and colloidal alumina may be included in the slurry.

In additional embodiments, the core 106 can include additional fire resistant additives, such as an intumescent material selected from the group consisting of expandable graphite, vermiculite, perlite, mica, and a combination thereof. In one embodiment, other mineral admixtures such as microsilica can be added to the core slurry. The microsilica can average between 1 micron and 500 microns in diameter. In one embodiment, the microsilica can have a size of no greater than 500 microns, such as no greater than 250 microns, or such as no greater than 100 microns. In one embodiment, microsilica is no greater than 2.7 wt. % of the building board, such as no greater than 1.89 wt.%, or no greater than 1.6 wt.%, or no greater than 1.5 wt.%, or no greater than 1.35 wt.% of the building board. In one embodiment, the microsilica is at least 0.054 wt.% of the building board. In one embodiment, the microsilica is at least 0.054 wt.%, such as at least 0.108 wt.%, or such as at least 0.27 wt.%.

An anti-shrinkage additive can be included in the core 106 and can be generally from about 0.025 wt.% to about 0.25 wt.%, depending on the type of material that is used. In one embodiment, the anti-shrinkage additive can include a silicone oil. Silicone oils can include a variety of different polysiloxanes. Such polysiloxanes can include both hydrogen and other functional groups to modify the polysiloxane backbone. For example, PMHS includes both Si-H and Si-CH3 bonds. A variety of silicones can be used in the methods and boards of the disclosure. In some embodiments of the disclosure as described herein, the silicone oil includes an alkyl-functional silicone. As used herein, an alkyl-functional silicone is a polysiloxane functionalized with alkyl groups. For example, in some embodiments, the silicone oil includes a methyl-functional silicone, an ethyl-functional silicone, a propyl-functional silicone, or a butyl-functional silicone. In some embodiments, the silicone oil is polydimethylsiloxane.

However, in some embodiments, the silicone oil can be a copolymer of dimethylsiloxane, for example, with methylsiloxane or phenylsiloxane (in amounts such that the hydride content remains low). However, it is desirable in many embodiments that the molar content of dimethylsiloxane units in the silicone oil is at least 90%, e.g., at least 95% or at least 99%. In one embodiment, the anti-shrinkage additive can include a material selected from the group consisting of polysiloxane material, silicone oil, polydimethylsiloxane (PDMS), polymethylhydrosiloxane (PMHS), or any combination thereof. In one embodiment, the anti-shrinkage additive can be no greater than 0.25 wt. % of the building board, such as no greater than 0.22 wt.%, or such as no greater than 0.175 wt. %, such as no greater than 0.16 wt. %, or such as no greater than 0.14 wt.%, or such as no greater than 0.1 wt.%, or such as no greater than 0.05 wt.% and greater than 0 wt.%. In one embodiment, the anti-shrinkage additive is greater than 0 wt.% of the building board.

In operation, the anti-shrinkage material can be dispersed into the slurry mixture as the slurry is being combined. In one embodiment, the silicone oil can be provided to the calcium sulfate slurry using an aqueous emulsion of the silicone oil. In some embodiments, the aqueous emulsion of silicone oil can be provided by emulsifying the silicone oil in water. The aqueous emulsion of silicone oil may be prepared by any emulsifying process as known in the art. For mineral filler such as clay or vermiculite, the amount can be generally from 2 wt.% to 10 wt.% of the building board. Reference weight is the total dry weight of the core material. The amount of glass fibers included in the first layer can be generally from about 0.1% to 1wt.%.

Optionally, the building board can include one or more additional layers between the core 106 and the first cover sheet 104 and/or the second cover sheet 102. In one embodiment, the one or more additional layers can include a denser slurry and can include a polymer additive to increase the overall durability of the building board. Polymer additives may be selected from the group consisting of polyvinyl acetate (PVA) or polyvinylalcohol (PVOH).

After deposition of the core 106, a first cover sheet 104 and second cover sheet 102 can be applied. In one embodiment, the first cover sheet 104 and the second cover sheet 102 are the same material. In another embodiment, the first cover sheet 104 and the second cover sheet 102 are different materials. The first cover sheet 104 and the second cover sheet 102 can include a woven or non-woven material of organic or inorganic fibers. In one embodiment, the cover sheet 102 and cover sheet 104 can be glass fiber mats. In another embodiment, the cover sheet 102 and cover sheet 104 may include cellulosic fibers, glass fibers, ceramic fibers, mineral wool, polyester, or a combination thereof. The first cover 102 and the second cover 104 may include individual sheets or multiple sheets. The cover sheet 104 can be embedded completely in the first layer 106. In one embodiment, the cover sheet 104 can be embedded to at least 85% in the first layer 106, such as at least 90%, at least 95%, at least 98%, at least 99%, or at least 99.9% based on the total volume of the fiber-mat.

The building board 100 can be included in a wall system or assembly of multiple boards, studs, and supports. The building board 100, as described above, can be manufactured utilizing typical manufacturing lines and in operation utilizing the following steps of the method 200, as seen in FIG. 2. In a mixer, the dry and wet ingredients of a slurry mixture can be combined and agitated. The slurry mixture can be a gypsum slurry mixture. Once thoroughly mixed, the slurry mixture is the precursor to forming the core 106. In one embodiment, the slurry mixer can be spread over a first cover sheet 104. In one embodiment, the slurry mixture can be spread over a densified slurry mixture and then solidified. At operation 210, once solidified, the slurry mixture forms the core 106.

Optionally, a second densified slurry mixture can then be spread over the core 106 and covered with a second cover sheet 102 to form the building board 100. In one embodiment, the core 106, and any additional layers are rolled between a first cover sheet 104 and a second cover sheet 102 to form the building board 100, at operation 230. In a subsequent step, the building board 100 can be dried to further remove moisture. It should be understood that additional layers, such as skim coats or roller coats, may also be included.

The combination of additives can provide the building boards with good fire resistance. One way to measure the fire resistance properties of the board is to measure the amount of shrinkage the board undergoes when exposed to high temperature. Such measurements can be performed as described in ASTM C1795-15, which can be used to measure high-temperature shrinkage at 850°C. Additionally, measurements can be performed by the shrinkage test described below. Lower shrinkage is indicative of better fire resistance. In some embodiments, the building board shrinks by less than 6% (e.g., less than 5%, or less than 4%) when heated to 850°C as measured by the method described below.

While the ASTM standard is one way in which to test the shrinkage of a building board, the temperature of said test is measured for at most 850°C. The dynamic shrinkage test, as will be described in more detail below with respect to the samples of Table 1, also tests shrinkage of building boards but with the added benefits of testing to see how the boards will react after being exposed not only to 850°C but at much higher temperatures as well. In other words, the dynamic shrinkage test will evaluate how a building board performs in a broader temperature range. The dynamic shrinkage test measures the one-dimensional shrinkage of a board standing vertically within a furnace with a rod resting on the top of the building board using laser triangulation.

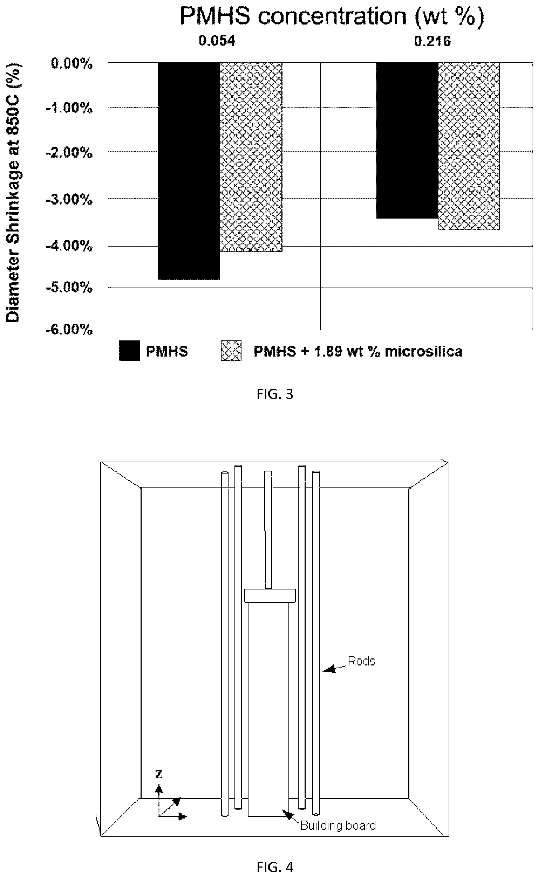

FIG. 3 includes a graph comparing the effects of different concentrations of polysiloxane material and microsilica, according to one embodiment. The samples evaluated in FIG. 3 were measured using the ASTM C1795-15 shrinkage test. Unexpectedly, the building boards with a low concentration of polysiloxane material and microsilica had better anti-shrinkage effects than boards with higher concentrations of polysiloxane material and microsilica. As can be seen in FIG. 3, the building boards that contained 0.054 wt.% of polysiloxane material had a higher shrinkage percentage (shrunk more) than the building board that contained 0.054 wt.% of polysiloxane material and 1.89 wt.% of microsilica. However, surprisingly, the building board that contained 0.216 wt.% of polysiloxane alone had a lower shrinkage percentage (shrunk less) than the building board that contained 0.216 wt.% of polysiloxane material and 1.89 wt.% of microsilica. The beneficial and synergistic effects of the combined polysiloxane material and microsilica are seen in building boards with low concentrations of the polysiloxane material, such as less than 0.216 wt.% of polysiloxane material.

The formed building board can have a linear shrinkage of less than 8.5%. In some embodiments, the building board has one or more (for instance, two or even all) of the following features: the building board have a linear shrinkage of less than 8.5%; and/or a shrinkage improvement of at least 6%, wherein the shrinkage improvement is equal to a percentage the building board did not shrink as compared to an amount of shrinkage that a standard board without a combined polysiloxane material and microsilica; and/or an amount of microsilica of no greater than 2.7 wt.% of the building board; and/or an amount of additive of no greater than 0.25 wt.% of the building board.

Many different aspects and embodiments are possible. Some of those aspects and embodiments are described herein. After reading this specification, skilled artisans will appreciate that those aspects and embodiments are only illustrative and do not limit the scope of the present invention. Embodiments may be in accordance with any one or more of the embodiments as listed below.

### Embodiments

Embodiment 1. A building board is disclosed. The building board can include a first cover sheet; a second cover sheet; a core can include gypsum disposed between the first and second cover sheets. The core can include gypsum, microsilica, and an additive. The microsilica can be no greater than 2.7 wt.% of the building board. The additive can include a polysiloxane material in an amount no greater than 0.25 wt.% of the building board.

Embodiment 2. The building board of embodiment 1, where the polysiloxane material is selected from the group consisting of silicone oil, polydimethylsiloxane (PDMS), polymethylhydrosiloxane (PMHS), or any combination thereof.

Embodiment 3. The building board of embodiment 1 or 2, where the additive is greater than 0 wt. %.

Embodiment 4. The building board of any one of embodiments 1 to 3, where the additive is no greater than 0.22 wt.%, such as no greater than 0.175 wt.%, such as no greater than 0.16 wt.%, or such as no greater than 0.14 wt.%, or such as no greater than 0.1 wt.%, or such as no greater than 0.05 wt.%, of the building board.

Embodiment 5. The building board of any one of embodiments 1 to 4, where the gypsum is no greater than 94 wt.% of the building board, such as no greater than 90 wt.% of the building board, or no greater than 85 wt.% of the building board and at least 50 wt.% of the building board.

Embodiment 6. The building board of any one of embodiments 1 to 5, further can include a second additive, where the second additive comprises a material selected from the group consisting of expandable graphite, vermiculite, perlite, mica, and a combination thereof.

Embodiment 7. The building board of any one of embodiments 1 to 6, where the microsilica has a size of no greater than 500 microns.

Embodiment 8. The building board of any one of embodiments 1 to 7, where the microsilica is no greater than 1.89 wt. % of the building board, such as no greater than 1.6 wt. %, or no greater than 1.5 wt. % of the building board, or no greater than 1.35 wt. % of the building board.

Embodiment 9. The building board of any one of embodiments 1 to 8, where the microsilica is at least 0.108 wt. % of the building board, such as at least 0.27 wt% of the building board.

Embodiment 10. A building board is disclosed. The building board can include a first cover sheet, a second cover sheet, and a core between the first and second cover sheets. The core can include gypsum, microsilica, and an additive. The additive can include a polysiloxane material. The building board has one of the following: a linear shrinkage of less than 8.5% or a shrinkage improvement of at least 6%, where the shrinkage improvement is equal to a percentage the building board did not shrink as compared to an amount of shrinkage that a standard board without a combined polysiloxane material and microsilica.

Embodiment 11. The building board of any one of embodiments 1 to 10, where the linear shrinkage is less than 7% after exposure to a temperature of at least 960°C, such as less than 6%, or such as less than 5%, or such as less than 4.5% after exposure to a temperature of at least 960°C.

Embodiment 12. The building board of any one of embodiments 1 to 11, where the linear shrinkage is less than 8% after exposure to a temperature of at least 1000°C.

Embodiment 13. The building board of any one of embodiment 10 to 12, where the polysiloxane material is selected from the group consisting of silicone oil, polydimethylsiloxane (PDMS), polymethylhydrosiloxane (PMHS), or any combination thereof.

Embodiment 14. The building board of any one of embodiments 10 to 13, where the additive is greater than 0 wt.%.

Embodiment 15. The building board of any one of embodiments 10 to 14, where the additive is no greater than 0.25wt.%, such as no greater than 0.22 wt.%, or no greater than 0.175 wt.%, or no greater than 0.16 wt.%, or such as no greater than 0.14 wt.%, or such as no greater than 0.1 wt.%, or such as no greater than 0.05 wt.%.

Embodiment 16. The building board of any one of embodiments 10 to 15, where the gypsum is no greater than 94 wt.% of the building board, such as no greater than 90 wt.% of the building board, or no greater than 85 wt.% of the building board and at least 50 wt.% of the building board.

Embodiment 17. The building board of any one of embodiments 10 to 16, further can include a second additive, where the second additive comprises a material selected from the group consisting of expandable graphite, vermiculite, perlite, mica, and a combination thereof.

Embodiment 18. The building board of any one of embodiments 10 to 17, where the microsilica has a size of no greater than 500 microns.

Embodiment 19. The building board of any one of embodiments 10 to 18, where the microsilica is no greater than 2.7 wt.% of the building board, such as no greater than 1.89 wt.% of the building board, or no greater than 1.6 wt.%, or no greater than 1.5 wt.% of the building board, or no greater than 1.35 wt.% of the building board.

Embodiment 20. The building board of any one of embodiments 10 to 19, where the microsilica is at least 0.2 wt.% of the building board, such as at least 0.108 wt.% of the building board, or at least 0.27 wt.% of the building board.

Embodiment 21. The building board of any one of embodiments 1 to 20, where the shrinkage improvement is at least 5%, such as at least 3%, or such as at least 2%.

Embodiment 22. A method of making a building board can include forming a first layer can include gypsum, microsilica, and an additive, where the microsilica is no greater than 2.7 wt.% of the building board, where the additive comprises a polysiloxane material, and where the additive is no greater than 0.25 wt.% of the building board; and rolling the first layer and formed interlayer between two cover sheets to form a building board (the building board being preferably as defined in any one of embodiments 1 to 21).

### Examples

The following non-limiting examples illustrate the present invention.

Samples 1-7 were tested to determine the percentage of shrinkage of the building board after exposure to temperatures ranging from 25°C to 1000°C. Samples 1 and 5 are each a building board with a polysiloxane material as the only additive. Samples 2-4, 6, and 7 are each building boards with an interlayer additive with a polysiloxane material and microsilica, as described above.

Each board of samples 1-7 includes a cover sheet with a 481b/MSF. To prepare the board stucco was mixed with water (73 wt.%), starch (0.75 wt.%), gypsum accelerator (0.3 wt.%) dispersing agent (0.0075 wt.%) and retarder (0.039 wt.%). Fire additives such as siloxane were added at 0.054 wt.% and microsilica at 0 to 1.89 wt.% The foam (produced from 1% foaming agent) then injected to the gypsum mixture to achieve board density at 1850 lbs/msf with board thickness at 5/8". The details of comparative samples 1-7 are described in Table 1 below:

**Table 1:**

| Sample | Silicone type and dosage (wt. %) | Microsilica (wt.%) |
|---|---|---|
| 1 | PDMS (0.054) | 0 |
| 2 | PDMS (0.054) | 0.81 |
| 3 | PDMS (0.054) | 1.35 |
| 4 | PDMS (0.054) | 1.89 |
| 5 | PMHS (0.054) | 0 |
| 6 | PMHS (0.054) | 0.81 |
| 7 | PMHS (0.054) | 1.35 |

The boards were then dried at 180°C for 35 minutes and at 40°C for 12 hours. The building boards were evaluated using a dynamic shrinkage test to evaluate the thermal shrinkage of the building board (FIG. 4). For testing, four metal alumina support rods are run through the middle of a furnace. A building board is cut to 254mm x 153mm. The building board is placed in the center of the four alumina support rods, as seen in the schematic below. An alumina plate is placed on top of the building board and used to secure the building board in place. The board is placed such that the boards do not touch any of the four rods. The test measures one-dimensional shrinkage of a building board by measuring the displacement of a rod resting on the edge of the furnace with a direct laser reading of the rod displacement.

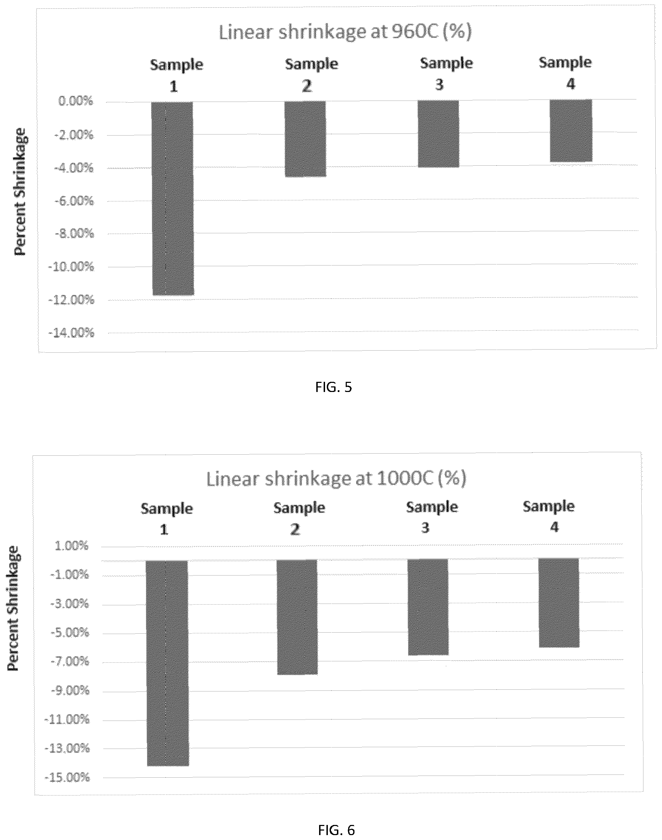

The dynamic shrinkage test evaluates linear shrinkage, as a percentage, by measuring an area above a shrinkage curve over a temperature range. The shrinkage curve evaluates the displacement of the building board, measured as a percentage of original length, versus temperature up to 1000°C. The percentage of board shrinkage was measured for each sample after being fired for 6 hours over a temperature range ramping up from 30°C to 1000°C. For testing, the furnace is heated such that the furnace temperature follows the ISO curve up to 1000°C.
Graphs of FIG. 5, 6 and 7 show a summary of measured properties of the building boards from Table 1.

Shrinkage can occur because of dehydration, expansion of additives (where applicable) and sintering reactions. As can be seen in Graph of FIG. 5, samples 2 to 4 shrunk in the z direction by less than 11% after exposure to a temperature of at least 960°C.

Samples 2 to 4 shrunk in the z direction by less than 6% after exposure to a temperature of at least 960°C. Samples 2 to 4 shrunk in the z direction by less than 5% after exposure to a temperature of at least 960°C. Samples 2 to 4 shrunk in the z direction by between 3% and 4.5% after exposure to a temperature of at least 960°C. Samples 3 and 4 shrunk in the z direction by less than 4.5% after exposure to a temperature of at least 960°C. Sample 4 shrunk in the z direction by less than 4% after exposure to a temperature of at least 960°C. Samples 2-4 show a shrinkage improvement over the standard board seen in sample 1 of at least 1% after exposure to a temperature of at least 960°C. The shrinkage improvement is equal to the percentage a building board did not shrink as compared to an amount of shrinkage that a standard board without the combined polysiloxane material and microsilica. Samples 2-4 show a shrinkage improvement over the standard board seen in sample 1 of at least 3% after exposure to a temperature of at least 960°C. Samples 2-4 show a shrinkage improvement over the standard board seen in sample 1 of at least 5% after exposure to a temperature of at least 960°C. Samples 2-4 show a shrinkage improvement over the standard board seen in sample 1 of at least 7% after exposure to a temperature of at least 960°C. Samples 2-4 show a shrinkage improvement over the standard board seen in sample 1 of between 1% and 7% after exposure to a temperature of at least 960°C. Samples 3 and 4 show a shrinkage improvement over the standard board seen in sample 1 of between 1% and 7.5% after exposure to a temperature of at least 960°C.

As can be seen in Graph of FIG. 6, samples 2 to 4 shrunk in the z direction by less than 14% after exposure to a temperature of at least 1000°C. Samples 2 to 4 shrunk in the z direction by less than 11% after exposure to a temperature of at least 1000°C. Samples 2 to 4 shrunk in the z direction by less than 9% after exposure to a temperature of at least 1000°C. Samples 2 to 4 shrunk in the z direction by between 6% and 8% after exposure to a temperature of at least 1000°C. Samples 3 and 4 shrunk in the z direction by less than 7% after exposure to a temperature of at least 1000°C. Sample 4 shrunk in the z direction by less than 6.5% after exposure to a temperature of at least 1000°C. Samples 2-4 show a shrinkage improvement over the standard board seen in sample 1 of at least 1% after exposure to a temperature of at least 1000°C. The shrinkage improvement is equal to the percentage a building board did not shrink as compared to an amount of shrinkage that a standard board without the combined polysiloxane material and microsilica. Samples 2-4 show a shrinkage improvement over the standard board seen in sample 1 of at least 3% after exposure to a temperature of at least 1000°C. Samples 2-4 show a shrinkage improvement over the standard board seen in sample 1 of at least 5% after exposure to a temperature of at least 1000°C. Samples 2-4 show a shrinkage improvement over the standard board seen in sample 1 of at least 6% after exposure to a temperature of at least 1000°C. Samples 2-4 show a shrinkage improvement over the standard board seen in sample 1 of between 1% and 6% after exposure to a temperature of at least 1000°C. Samples 3 and 4 show a shrinkage improvement over the standard board seen in sample 1 of between 1% and 7.5% after exposure to a temperature of at least 1000°C. Sample 4 shows a shrinkage improvement over the standard board seen in sample 1 of between 1% and 8% after exposure to a temperature of at least 1000°C.

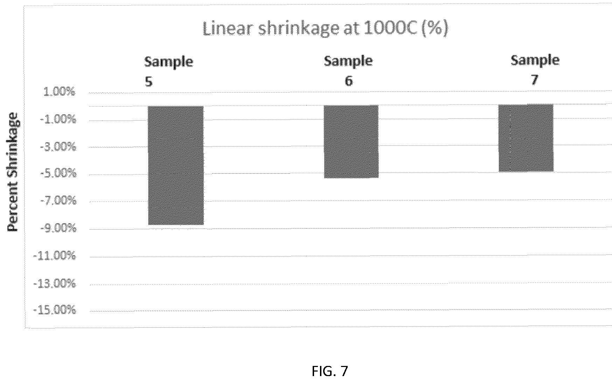

As can be seen in Graph of FIG. 7, samples 6 and 7 shrunk in the z direction by less than 8.5% after exposure to a temperature of at least 1000°C. Samples 6 and 7 shrunk in the z direction by less than 7% after exposure to a temperature of at least 1000°C. Samples 6 and 7 shrunk in the z direction by less than 6% after exposure to a temperature of at least 1000°C. Samples 6 and 7 shrunk in the z direction by between 8.5% and 5% after exposure to a temperature of at least 1000°C. Sample 7 shrunk in the z direction by less than 5% after exposure to a temperature of at least 1000°C. Samples 6 and 7 show a shrinkage improvement over the standard board seen in sample 5 of at least 1% after exposure to a temperature of at least 1000°C. The shrinkage improvement is equal to the percentage a building board did not shrink as compared to an amount of shrinkage that a standard board without the combined polysiloxane material and microsilica. Samples 6 and 7 show a shrinkage improvement over the standard board seen in sample 5 of at least 2% after exposure to a temperature of at least 1000°C. Samples 6 and 7 show a shrinkage improvement over the standard board seen in sample 5 of at least 3% after exposure to a temperature of at least 1000°C. Sample 7 shows a shrinkage improvement over the standard board seen in sample 5 of at least 3.5% after exposure to a temperature of at least 1000°C. Samples 6 and 7 show a shrinkage improvement over the standard board seen in sample 5 of between 1% and 3% after exposure to a temperature of at least 1000°C.

In the foregoing specification, the concepts have been described with reference to specific embodiments. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of the invention.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

## Claims

1. A building board, comprising:
a first cover sheet;
a second cover sheet;
a core between the first and second cover sheets, wherein the core comprises:
gypsum;
microsilica; and
an additive, the additive comprising a polysiloxane material;
wherein the building board has one or more of the following features i), ii), and iii):
i) the microsilica is no greater than 2.7 wt. % of the building board and the additive is no greater than 0.25 wt. % of the building board;
ii) a linear shrinkage of less than 8.5%; or
iii) a shrinkage improvement of at least 6%, wherein the shrinkage improvement is equal to a percentage the building board did not shrink as compared to an amount of shrinkage that a standard board without a combined polysiloxane material and microsilica,
the linear shrinkage and the shrinkage improvement being determined after exposure to a temperature of at least 1000°C.

2. The building board of claim 1, wherein the microsilica is no greater than 2.7 wt. % of the building board and the additive is no greater than 0.25 wt. % of the building board.

3. The building board of claim 1 or 2, wherein the building board has one of the following:
- a linear shrinkage of less than 8.5%; or
- a shrinkage improvement of at least 6%, wherein the shrinkage improvement is equal to a percentage the building board did not shrink as compared to an amount of shrinkage that a standard board without a combined polysiloxane material and microsilica.

4. The building board of any one of claims 1 to 3, wherein the polysiloxane material is selected from the group consisting of silicone oil, polydimethylsiloxane (PDMS), polymethylhydrosiloxane (PMHS), or any combination thereof.

5. The building board of any one of claims 1 to 4, wherein the additive is greater than 0 wt.%.

6. The building board of any one of claims 1 to 5, wherein the additive is no greater than 0.22 wt.% such as no greater than 0.175 wt.%, such as no greater than 0.16 wt.%, or such as no greater than 0.14 wt.%, or such as no greater than 0.1 wt.%, or such as no greater than 0.05 wt.%.

7. The building board of any one of claims 1 to 6, wherein the gypsum is no greater than 94 wt.% of the building board, such as no greater than 90 wt.% of the building board, or no greater than 85 wt.% of the building board and at least 50 wt.% of the building board.

8. The building board of any one of claims 1 to 7, further comprising a second additive, wherein the second additive comprises a material selected from the group consisting of expandable graphite, vermiculite, perlite, mica, and a combination thereof.

9. The building board of any one of claims 1 to 8, wherein the microsilica has a size of no greater than 500 microns.

10. The building board of any one of claims 1 to 9, wherein the microsilica is no greater than 1.89 wt.% of the building board, such as no greater than 1.6 wt.%, or no greater than 1.5 wt.% of the building board, or no greater than 1.35 wt.% of the building board.

11. The building board of any one of claims 1 to 10, wherein the microsilica is at least 0.108 wt.% of the building board, such as at least 0.2 wt%, such as at least 0.27 wt.% of the building board.

12. The building board of any one of claims 1 to 11, wherein the linear shrinkage is less than 7% after exposure to a temperature of at least 960°C, such as less than 6%, or such as less than 5%, or such as less than 4.5% after exposure to a temperature of at least 960°C.

13. The building board of any one of claims 1 to 12, wherein the linear shrinkage is less than 8% after exposure to a temperature of at least 1000°C.

14. The building board of any one of claims 1 to 13, wherein the shrinkage improvement is at least 5%, such as at least 3%, or such as at least 2%.

15. A method of making a building board as defined in any one of claims 1 to 14, said method comprising:
forming a first layer comprising gypsum, microsilica, and an additive, wherein the additive comprises a polysiloxane material; and
rolling the first layer and formed interlayer between two cover sheets to form a building board,
wherein the building board has one or more of the following features i), ii), and iii):
i) the microsilica is no greater than 2.7 wt. % of the building board and the additive is no greater than 0.25 wt. % of the building board;
ii) a linear shrinkage of less than 8.5%; or
iii) a shrinkage improvement of at least 6%, wherein the shrinkage improvement is equal to a percentage the building board did not shrink as compared to an amount of shrinkage that a standard board without a combined polysiloxane material and microsilica.
